# EUROPÄISCHE PATENTSCHRIFT

(11) **EP 2 902 648 B1**
(45) Veröffentlichungstag und Bekanntmachung des Hinweises auf die Patenterteilung: **07.09.2016**
(21) Anmeldenummer: 14000385.6
(22) Anmeldetag: 03.02.2014
(51) Int. Cl.: F16C 41/00, F16C 25/08

(54) **Lageranordnung für einen Elektromotor mit axial vorgespanntem Kugellager**
Bearing assembly for an electric motor with axially pre-tensioned roller bearing
Agencement de palier pour un moteur électrique avec roulement à billes précontraint en direction axiale

(43) Veröffentlichungstag der Anmeldung: 05.08.2015
(73) Patentinhaber: Lakeview Innovation Ltd., 6374 Buochs (CH)
(72) Erfinder: Teimel, Arnold, Ch-6074 Giswil (CH)
(74) Vertreter: Grünecker Patent- und Rechtsanwälte PartG mbB

(56) Entgegenhaltungen:
- EP-A2- 0 143 950
- DE-A1- 2 436 950
- DE-A1- 2 807 411
- DE-A1-102008 046 911
- DE-A1-102011 002 913
- DE-T2- 69 111 193
- GB-A- 2 057 068
- US-A- 3 855 383
- US-A1- 2011 182 542

## Beschreibung

Die vorliegende Erfindung betrifft eine Lageranordnung für einen Elektromotor, insbesondere für einen Elektrokleinmotor. Die Lageranordnung umfasst ein axial vorgespanntes Kugellager. Das Kugellager weist einen Außenring und einen relativ zum Außenring drehbar gelagerten Innenring auf. Zwischen den beiden Ringen befinden sich die Kugeln des Kugellagers. Die Lageranordnung umfasst ferner einen Axialanschlag, ein zwischen dem Axialanschlag und Innen- bzw. Außenring angeordnetes Federelement zur Erzeugung der axialen Vorspannung, sowie eine zwischen Federelement, und Innen- oder Außenring angeordnete Anlaufscheibe.

Derartige Lageranordnungen sind aus dem Stand der Technik bekannt. Die Welle eines Elektromotors wird üblicherweise an einem Ende mittels eines Festlagers drehbar am Gehäuse bzw. Stator des Elektromotors gelagert. An dem anderen Ende befindet sich üblicherweise ein Loslager, das in axialer Richtung vorgespannt ist. Bei Elektrokleinmotoren wird dazu meist der Innenring des Lagers lose auf die Welle aufgesteckt. Durch eine axial wirkende Feder, die sich an einem Anschlag der Welle abstützt und mit einer definierten Kraft auf den Innenring des Loslagers wirkt, wird das Lagerspiel aufgehoben und das Lager axial vorgespannt. Es entsteht ein spielfreier Lauf des Rotors und eine unerwünschte Gleitbewegung der Kugeln des Lagers, welche zu einem frühzeitigen Verschleiß des Lagers führen würde, wird vermieden. Als Anschlag dienen häufig sogenannte Axialsicherungsringe, die auf die Welle aufgepresst oder mit dieser verschweißt werden.

Ebenso ist es möglich, anstatt des Innenrings den Außenring axial vorzuspannen. Der Innenring wird in diesem Fall fest mit der Welle verbunden, die Feder wirkt zwischen dem Außenring des Lagers und einem Axialanschlag des Gehäuses bzw. eines feststehenden Bauteils.

Um zu verhindern, dass das Federende in den Spalt zwischen dem jeweils vorgespannten Lagerring und der Deckscheibe des Kugellagers gelangt und dort hohe Reibungsverluste verursacht, ist in der Regel, so auch bei der gattungsgemäßen Lageranordnung, eine Anlaufscheibe zwischen der Feder und dem jeweils vorgespannten Lagerring angeordnet. Die Anlaufscheibe besteht meist aus Metall.

Als nachteilig hat sich erwiesen, dass je nach radialer Belastung am Wellenende, Umdrehungsgeschwindigkeit des Rotors, Viskosität des Schmierstoffs im Lager, oder auch der Umgebungstemperatur eine Relativbewegung zwischen Welle und Kugellager-Innenring bzw. zwischen Kugellageraußenring und Gehäuse auftreten kann. Bei axial vorgespanntem Innenring liegt dies darin begründet, dass die in Umfangsrichtung wirkenden Kräfte zwischen dem mitdrehenden Axialsicherungsring auf der Welle und dem Kugellager-Innenring nicht ausreichen, um die Lagerverluste zuverlässig zu überwinden. Die dadurch verursachte Relativbewegung kann zu unerwünschten, teilweise sehr hochfrequenten Geräuschen und zu Passungsrost führen. Passungsrost ist ein häufiger Grund für Frühausfälle von Kugellagern.

Aus DE 2436950 A1 ist ein Elektrokleinstmotor zum Antrieb von zahnärztlichen Hand- und Winkelstücken bekannt. Die Welle ist beidseitig mittels eines Kugellagers drehbar gelagert, wobei sich an einem Ende ein Festlager, und an dem anderen Ende ein Loslager befindet. Auf der Loslagerseite ist der Außenring des Kugellagers axial vorgespannt. Zwischen dem Außenumfang des Außenrings und dem Gehäuse ist ein gummielastischer Rundschnurring vorgesehen, der zur radialen Abstützung dient. Ein ähnlicher gummielastischer Rundschnurring ist auch auf der Festlagerseite vorgesehen. Zweck der beiden gummielastischen Ringe ist es, die Lager zu schonen, indem Stöße und Schwingungen federnd abgefangen werden, was zu einer Verlängerung der Lebensdauer des gesamten-Motors führen würde. Durch die elastische Aufhängung der Lager würden auch die Laufgeräusche des Motors wesentlich herabgesetzt, da praktisch keine formschlüssige Verbindung zwischen Lager und Motorgehäuse vorhanden sei. Ein weiterer wesentlicher Vorteil sei, dass die Fertigung und Montage des Motors erleichtert werde, da die ansonsten vorgegebenen engen Passungstoleranzen nicht mehr eingehalten werden müssten.

Die beiden gummielastischen Rundschnurringe erlauben ein radiales Ausweichen der Rotorwelle des Elektrokleinstmotors. Die Welle ist daher in radialer Richtung nicht eindeutig in Bezug auf das Motorgehäuse festgelegt. Die aus DE 2436950 A1 bekannte Lösung ist daher nicht für Anwendungen geeignet, die nach höchster Präzision verlangen. Auch erfordern die zwischen Lager und Gehäuse angeordneten gummielastischen Ringe zusätzlichen Bauraum in radialer Richtung. Ein weiterer Nachteil dieser Anordnung besteht darin, dass für eine ausreichend stabile Lagerung des Rotors die Rundschnurringe elastisch radial vorgespannt sein müssen. Die dabei entstehenden Druckkräfte zwischen Rundschnurring und Kugellageraussenring erschweren die axiale Beweglichkeit des Lagers. Die durch die Feder angestrebte Vorspannungskraft zwischen den Lagerringen kann dadurch stark beeinflusst oder gar unwirksam werden.

Aufgabe der vorliegenden Erfindung ist es daher, eine Lageranordnung mit einem axial vorgespannten Kugellager anzugeben, die höchste Präzision gewährleistet und dabei auf möglichst einfache Weise hochfrequente Geräuschentwicklung sowie Passungsrost vermeidet.

Die Aufgabe wird gelöst durch die Merkmale des unabhängigen Anspruchs 1. Demnach liegt bei einer Lageranordnung der eingangs genannten Art dann eine erfindungsgemäße Lösung der Aufgabe vor, wenn die Anlaufscheibe beidseitig mit einer haftreibungserhöhenden Schicht beschichtet ist. Auf diese Weise erhöht sich die Haftreibung sowohl zwischen der Feder und der Anlaufscheibe als auch zwischen der Anlaufscheibe und dem jeweils vorgespannten Lagerring. Dadurch wird eine Relativbewegung in Umfangsrichtung wirksam vermieden. Die Lebensdauer des Lagers wird signifikant erhöht. Die erfindungsgemäße Lösung hat weiter den Vorteil, dass sie relativ einfach umgesetzt werden kann. Es sind keine zusätzlichen Bauteile erforderlich, auch die Abmessungen eines mit einer erfindungsgmäßen Lageranördnung ausgerüsteten Elektromotors bleiben im Vergleich zur herkömmlichen Bauweise im Wesentlichen gleich.

Es wird darauf hingewiesen, dass sich die Erfindung sowohl bei axial vorgespanntem Außenring als auch bei axial vorgespanntem Innenring eignet. Falls der Außenring vorgespannt wird, ist üblicherweise am Motorgehäuse ein Axialanschlag ausgebildet. Im Falle eines axial vorgespannten Innenrings kann ein mit der Welle verschweißter oder auf diese aufgepresster Axialsicherungsring als Axialanschlag dienen. Ferner wird darauf hingewiesen, dass Axialanschlag und Federelement im Rahmen der vorliegenden Erfindung auch einteilig ausgebildet sein können. Beispielsweise kann das Federelement als Federscheibe ausgebildet sein, die auf die Welle eines Elektromotors aufgepresst bzw. mit der Welle verschweißt ist. Die feste Verbindung zwischen Federelement und Welle bildet in diesem Fall den Axialanschlag.

Vorteilhafte Ausführungsformen der vorliegenden Erfindung sind Gegenstand der Unteransprüche.

In einer bevorzugten Ausführungsform der vorliegenden Erfindung ist die Anlaufscheibe aus einem metallischen Werkstoff gefertigt. Dadurch ist die Anlaufscheibe stabil genug, um die durch das Federelement erzeugte Vorspannung auf das Lager zu übertragen. Gleichzeitig ist die Anlaufscheibe dadurch selbst bei sehr geringer Materialstärke äußerst robust und langlebig. Alternativ ist es auch denkbar, die Anlaufscheibe aus einem Kunststoff- oder Keramikmaterial zu fertigen. Es wird darauf hingewiesen, dass bei Verwendung von Kunststoff auf eine ausreichende Stabilität bzw. Festigkeit geachtet werden muss. Das Grundmaterial der Anlaufscheibe ist daher auch bei der Verwendung von Kunststoff in der Regel unterschiedlich zu dem Material der haftreibungserhöhenden Schicht. Wichtig ist jedenfalls, dass die Beschichtung zu einer Erhöhung der Haftreibung führt.

In einer besonders bevorzugten Ausführungsform der vorliegenden Erfindung besteht die Schicht aus Gummi oder aus einem Elastomer. Die Gummi- bzw. Elastomerschicht bewirkt zusätzlich eine Vibrationsdämpfung, was zu einer weiteren Geräuschreduzierung führt.

Eine besonders hohe Lebensdauer der Lageranordnung wird erreicht, wenn die Schicht aus einem feuchtebeständigen Kautschuk besteht. Als besonders vorteilhaft hat sich die Verwendung von Nitrilkautschuk, hydriertem Acrylnitrilbutadien-Kautschuk oder Fluorkautschuk herausgestellt.

In einer weiteren bevorzugten Ausführungsform der vorliegenden Erfindung weist die Schicht eine Dicke zwischen 0,1 mm und 0,3 mm auf. Es hat sich herausgestellt, dass sich in diesem Bereich hervorragende Dämpfungseigenschaften einstellen. Gleichzeitig wird eine ausreichende Haftreibungserhöhung gewährleistet, um eine Relativbewegung in Umfangsrichtung zu vermeiden. Insbesondere im Hinblick auf den Einsatz der erfindungsgemäßen Lageranordnung in einem Elektrokleinstmotor ergibt sich bei dem angegebenen Dickenbereich zudem ein hervorragender Kompromiss zwischen Miniaturisierung und Sicherstellung der gewünschten Eigenschaften.

In einer weiteren bevorzugten Ausführungsform der vorliegenden Erfindung weist die Anlaufscheibe eine Dicke zwischen 0,2 mm und 0,5 mm auf. Auch bei dieser Ausführungsform wird eine besonders kompakte Bauweise bei gleichzeitig ausreichender Stabilität der Anlaufscheibe gewährleistet.

Um eine ausreichende Stabilität der Anlaufscheibe sicherzustellen, ist diese in einer weiteren bevorzugten Ausführungsform der vorliegenden Erfindung vorzugsweise aus Aluminium oder aus Edelstahl gefertigt.

Besonders einfach und kostengünstig herstellbar ist die erfindungsgemäße Lageranordnung, wenn die Anlaufscheibe aus einem beidseitig mit der haftreibungserhöhenden Schicht beschichteten Blech ausgestanzt ist.

Die vorliegende Erfindung stellt auch eine Anlaufscheibe für die erfindungsgemäße Lageranordnung bereit. Die erfindungsgemäße Lageranordnung dient vorzugsweise zur drehbaren Lagerung der Rotorwelle eines Elektrokleinmotors, relativ zum Stator des Motors.

Ein Ausführungsbeispiel der vorliegenden Erfindung wird im Folgenden anhand von Zeichnungen näher erläutert.

Es zeigen:
- Figur 1:: Einen Längsschnitt durch einen Elektrokleinmotor mit einer erfindungsgemäßen Lageranordnung, und
- Figur 2:: Eine Detailansicht der beidseitig beschichteten Anlaufscheibe der erfindungsgemäßen Lageranordnung aus Figur 1.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

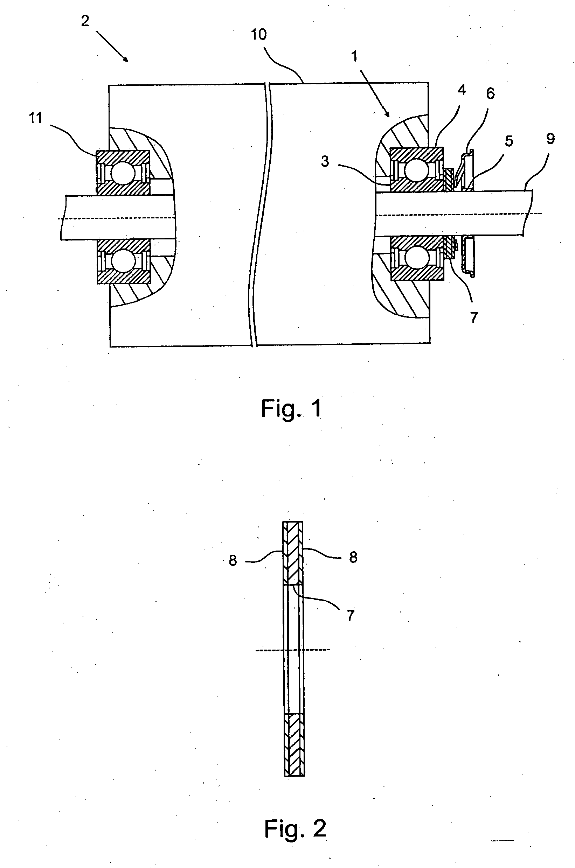

Figur 1 zeigt einen partiellen Längsschnitt durch einen Elektrokleinmotor 2 mit einer erfindungsgemäßen Lageranordnung 1. Von dem Elektromotor 2 sind lediglich die Welle 9 und das feststehende Motorgehäuse 10 dargestellt. Die Welle 9 ist beidseitig mittels zweier Kugellager drehbar im Motorgehäuse 10 gelagert. Auf der linken Seite ist das Festlager 11 dargestellt, auf der rechten Seite die erfindungsgemäße Lageranordnung 1 mit einem axial vorgespanntem Kugellager. Der Außenring 4 des rechten Kugellagers ist in einer Stufe des Motorgehäuses aufgenommen. Der Innenring 3 ist lose auf die Motorwelle 9 aufgesteckt. Er wird mittels einer Federscheibe 6 axial vorgespannt. Diese befindet sich zwischen einem mit der Welle 9 verschweißten Axialsicherungsring 5 und dem Innenring 3 des Kugellagers.

Um zu verhindern, dass das linke Ende der Federscheibe in den Kugellagerspalt gerät und dort zu hohen Reibungsverlusten führt, ist zwischen der Federscheibe 6 und dem Innenring 3 eine Anlaufscheibe 7 aus Metall angeordnet. Die Anlaufscheibe 7 ist im Detail in Figur 2 dargestellt. Sie ist beidseitig mit einer haftreibungserhöhenden und vibrationsdämpfenden Schicht 8 aus einem feuchtebeständigen Kautschuk beschichtet. Die Dicke der unbeschichteten Anlaufscheibe beträgt je nach verwendetem Material, wie beispielsweise Aluminium, Edelstahl, Keramik oder Kunststoff, zwischen 0,2 mm und 0,5 mm. Die Dicke der Kautschukschicht 8 beträgt zwischen 0,1 und 0,3 mm.

Bei dem dargestellten Ausführungsbeispiel ist die Federscheibe 6 integral mit dem Axialsicherungsring 5 ausgeführt. Dies bedeutet, die Federscheibe stellt gleichzeitig den Axialsicherungsring dar und ist mit der Welle 9 des Elektromotors verschweißt. Sie dreht sich daher mit der Welle des Elektromotors mit. Durch die haftreibungserhöhende Schicht 8 der Metall-Anlaufscheibe 7 wird dafür gesorgt, dass die Haftreibung zwischen Federscheibe und Anlaufscheibe und zwischen Anlaufscheibe und Innenring gewährleistet, dass auch der Innenring 3 zusammen mit der Welle 9 des Elektromotors rotiert. Eine Relativbewegung zwischen Welle 9 und Innenring 3 wird auf diese Weise wirksam vermieden. Die beidseitige Beschichtung der Anlaufscheibe wirkt zudem geräuschdämpfend und führt insgesamt zu einer signifikant erhöhten Lebensdauer des Kugellagers. Insbesondere wird Passungsrost vermieden.

## Patentansprüche

1. Lageranordnung (1) für einen Elektromotor (2), insbesondere für einen Elektrokleinmotor, mit einem axial vorgespannten Kugellager, umfassend einen Innenring (3) und einen Außenring (4), wobei die Lageranordnung (1) einen Axialanschlag (5), ein zwischen Axialanschlag (5) und Innen- oder Außenring (3, 4) angeordnetes Federelement (6) zur Erzeugung der axialen Vorspannung, sowie eine zwischen Federelement (6) und Innen- oder Außenring (3, 4) angeordnete Anlaufscheibe (7) aufweist, **dadurch gekennzeichnet, dass** die Anlaufscheibe (7) beidseitig mit einer haftreibungserhöhenden Schicht (8) beschichtet ist.

2. Lageranordnung (1) nach Anspruch 1, **dadurch gekennzeichnet, dass** die Anlaufscheibe aus einem metallischen Werkstoff gefertigt ist.

3. Lageranordnung (1) nach Anspruch 1 oder 2, **dadurch gekennzeichnet, dass** die Schicht (8) aus Gummi oder aus einem Elastomer besteht.

4. Lageranordnung (1) nach Anspruch 3, **dadurch gekennzeichnet, dass** die Schicht (8) aus einem feuchtebeständigen Kautschuk, vorzugsweise aus Nitrilkautschuk, hydriertem Acrylnitrilbutadien-Kautschuk oder Fluorkautschuk besteht.

5. Lageranordnung (1) nach einem der Ansprüche 1 bis 4, **dadurch gekennzeichnet, dass** die Schicht (8) eine Dicke zwischen 0,1 mm und 0,3 mm aufweist.

6. Lageranordnung (1) nach einem der Ansprüche 1 bis 5, **dadurch gekennzeichnet, dass** die Anlaufscheibe (7) eine Dicke zwischen 0,2 mm und 0,5 mm aufweist.

7. Lageranordnung (1) nach einem der Ansprüche 2 bis 6, **dadurch gekennzeichnet, dass** die Anlaufscheibe (7) aus Aluminium oder Edelstahl gefertigt ist.

8. Lageranordnung (1) nach einem der Ansprüche 2 bis 7, **dadurch gekennzeichnet, dass** die Anlaufscheibe (7) aus einem beidseitig mit der haftreibungserhöhenden Schicht (8) beschichteten Blech ausgestanzt ist.

9. Elektrokleinmotor (2) mit einem Stator (10) und einer relativ zum Stator (10) drehbar gelagerten Rotorwelle (9), **dadurch gekennzeichnet, dass** die Rotorwelle (9) mittels zumindest einer Lageranordnung (1) nach einem der Ansprüche 1 bis 8 relativ zum Stator (10) drehbar gelagert ist.

## Claims

1. Bearing assembly (1) for an electric motor (2), in particular for a small electric motor, with an axially preloaded ball bearing comprising an inner race (3) and an outer race (4), wherein said bearing assembly (1) comprises an axial stop (5), a spring element (6) disposed between said axial stop (5) and said inner or outer race (3, 4) for generating said axial preload, and a thrust washer (7) disposed between said spring element (6) and said inner or outer race (3, 4), **characterized in that** said thrust washer (7) is coated on both sides with a layer (8) increasing static friction.

2. Bearing assembly (1) according to claim 1, **characterized in that** said thrust washer is made of metallic material.

3. Bearing assembly (1) according to claim 1 or 2, **characterized in that** said layer (8) is made of rubber or of an elastomer.

4. Bearing assembly (1) according to claim 3, **characterized in that** said layer (8) is made of moisture-resistant natural rubber, preferably of nitrile rubber, hydrogenated acrylonitrile butadiene rubber or fluororubber.

5. Bearing assembly (1) according to one of the claims 1 to 4, **characterized in that** said layer (8) has a thickness between 0.1 mm and 0.3 mm.

6. Bearing assembly (1) according to one of the claims 1 to 5, **characterized in that** said thrust washer (7) has a thickness between 0.2 mm and 0.5 mm.

7. Bearing assembly (1) according to one of the claims 2 to 6, **characterized in that** said thrust washer (7) is made of aluminum or stainless steel.

8. Bearing assembly (1) according to one of the claims 2 to 7, **characterized in that** said thrust washer (7) is punched out from sheet metal coated on both sides with said layer (8) increasing static friction.

9. Small electric motor (2) with a stator (10) and a rotor shaft (9) mounted rotatable relative to said stator (10), **characterized in that** said rotor shaft (9) is mounted rotatable relative to said stator (10) by use of at least one bearing assembly (1) according to one of claims 1 to 8.

## Revendications

1. Agencement de palier (1) pour un moteur électrique (2), notamment un moteur électrique miniature, comprenant un roulement à billes en précontrainte axiale, qui comporte une bague intérieure (3) et une bague extérieure (4), l'agencement de palier (1) présentant une butée axiale (5), un élément de ressort (6), qui est agencé entre la butée axiale (5) et la bague intérieure ou extérieure (3, 4) et est destiné à produire la précontrainte axiale, ainsi qu'une rondelle de poussée (7) agencée entre l'élément de ressort (6) et la bague intérieure ou extérieure (3, 4), **caractérisé en ce que** la rondelle de poussée (7) est revêtue sur les deux faces d'une couche d'augmentation de la friction d'adhérence (8).

2. Agencement de palier (1) selon la revendication 1, **caractérisé en ce que** la rondelle de poussée est fabriquée en un matériau métallique.

3. Agencement de palier (1) selon la revendication 1 ou la revendication 2, **caractérisé en ce que** la couche (8) est réalisée en caoutchouc ou en un élastomère.

4. Agencement de palier (1) selon la revendication 3, **caractérisé en ce que** la couche (8) est réalisée en un caoutchouc résistant à l'humidité, de préférence un caoutchouc nitrile, un caoutchouc acrylonitrile-butadiène hydraté ou un caoutchouc fluoré.

5. Agencement de palier (1) selon l'une des revendications 1 à 4, **caractérisé en ce que** la couche (8) présente une épaisseur entre 0,1 mm et 0,3 mm.

6. Agencement de palier (1) selon l'une des revendications 1 à 5, **caractérisé en ce que** la rondelle de poussée (7) présente une épaisseur entre 0,2 mm et 0,5 mm.

7. Agencement de palier (1) selon l'une des revendications 2 à 6, **caractérisé en ce que** la rondelle de poussée (7) est fabriquée en aluminium ou en acier supérieur ou surfin.

8. Agencement de palier (1) selon l'une des revendications 2 à 7, **caractérisé en ce que** la rondelle de poussée (7) est découpée par matriçage dans une tôle revêtue sur les deux faces avec la couche d'augmentation de la friction d'adhérence (8).

9. Moteur électrique (2) comprenant un stator (10) et un arbre de rotor (9) monté rotatif par rapport au stator (10), **caractérisé en ce que** l'arbre de rotor (9) est monté en rotation par rapport au stator (10) au moyen d'au moins un agencement de palier (1) selon l'une des revendications 1 à 8.
